# FASCICULE DE BREVET EUROPEEN

(11) **EP 0 435 772 B1**
(45) Date de publication et mention de la délivrance du brevet: **10.11.1993**
(21) Numéro de dépôt: 90403782.7
(22) Date de dépôt: 27.12.1990
(51) Int. Cl.: H02G 5/06, H02B 1/21

(54) **Boîtier de protection pour barres de distribution électrique**
Schutzgehäuse für elektrische Verteilerschienen
Protective casing for electrical distribution bus bars

(30) Priorité: 28.12.1989 FR 8917345
(43) Date de publication de la demande: 03.07.1991
(73) Titulaire: TELEMECANIQUE, 92504 Rueil Malmaison Cedex (FR)
(72) Inventeur: Lafosse, Jean, F-21310 Mirebeau sur Beze (FR); Millière, Paul, F-21490 Varois et Chaignot (FR)
(74) Mandataire: Keib, Gérard

(56) Documents cités:
- WO-A-89/02177
- FR-A- 2 295 595
- FR-A- 2 562 344

## Description

La présente invention concerne un boîtier de protection pour barres de distribution électrique.

Dans certaines applications, on doit placer un boîtier de protection en matériau isolant autour d'une nappe de barres de distribution électrique telles que celles rencontrées dans les armoires électriques.

On connaît en particulier des armoires électriques qui sont traversées dans leur région supérieure par une nappe de barres de distribution électrique principale, s'étendant horizontalement, auxquelles on raccorde une nappe verticale descendant vers le bas de l'armoire dans une colonne comportant des moyens de branchement permettant de monter divers appareils placés de part et d'autre de la colonne.

On sait dans un tel cas placer au sommet de la colonne un boîtier de protection qui ferme le dessus de la colonne à l'exception d'ouvertures permettant aux barres de venir se raccorder aux barres principales. Ce boîtier de protection a pour but d'éviter que des éléments conducteurs tels que des vis ou des rondelles tombent dans la colonne lorsqu'on procède au raccordement entre la nappe principale et la nappe verticale.

Le boîtier de protection comprend deux demi-boîtiers dont l'un présente sur le pourtour de sa face ouverte des échancrures recevant des barres. Les deux demi-boîtiers sont amenés depuis chaque côté de la nappe verticale et assemblés l'un à l'autre en emprisonnant les barres entre eux. (voir par exemple le document FR-A-2295595).

Ce système de protection des sommets de colonne au moyen de demi-boîtiers en matière moulée conduit à fabriquer et à stocker un nombre important de demi-boîtiers différents. En effet, en fonction de la puissance transmise, les barres peuvent avoir des dimensions différentes correspondant à des dimensions différentes du boîtier en place. Il faut donc deux demi-boîtiers différents pour chaque dimension de barres.

Le but de l'invention est de proposer un boîtier de protection qui minimise le nombre de demi-boîtiers différents à fabriquer et à stocker pour faire face à tous les cas particuliers de puissance installée.

Suivant l'invention, le boîtier de protection pour barres de distribution électrique, en matériau isolant, destiné à entourer une région d'une nappe de barres de distribution électrique, ce boîtier comprenant deux demi-boîtiers comportant sur le pourtour d'une face ouverte des échancrures formant, après accouplement des demi-boîtiers, des passages d'entrée et de sortie pour les barres, est caractérisé en ce les deux demi-boîtiers s'accouplent par coulissement mutuel selon une direction d'accouplement sensiblement perpendiculaire à ladite nappe jusqu'à une position d'accouplement mutuel qui est variable en fonction de la dimension des barres parallèlement à la direction de coulissement.

Ainsi, un type unique de boîtier peut recevoir des barres de largeurs pouvant être très différentes, le coulissement des demi-boîtiers l'un vers l'autre étant simplement interrompu plus précocement lorsque les barres sont plus larges ou au contraire plus tardivement lorsque les barres sont plus étroites. Il est aisé de faire en sorte que dans tous les cas les échancrures, tout au moins celles donnant vers l'extérieur, soient occupées sensiblement en totalité par la section des barres qui les traversent (dans le cas d'un boîtier de protection destiné au sommet d'une colonne, la ou les échancrures donnant vers l'intérieur de la colonne ne ferment pas nécessairement le boîtier relativement à l'intérieur de la colonne).

D'autres particularités et avantages de l'invention apparaîtront au cours de la description d'un mode de réalisation que l'on va donner, à titre non limitatif.

Aux dessins annexés:
- la figure 1 est une vue en perspective de deux demi-boîtiers destinés à être accouplés pour constituer un boîtier conforme à l'invention;
- la figure 2 est une vue en perspective d'une colonne contenant des barres de distribution électrique équipée du boîtier de la figure 1;
- la figure 3 est une vue en perspective éclatée du dispositif de la figure 2;
- la figure 4 est une vue en élévation d'un demi-boîtier du côté de sa face ouverte avec arrachement et coupe partielle d'un canon isolant;
- la figure 5 est une vue à échelle agrandie du détail V de la figure 4;
- la figure 6 est une vue de dessus du demi-boîtier de la figure 4;
- la figure 7 est une vue en coupe selon VII-VII de la figure 4 de deux demi-boîtiers en position de début d'accouplement;
- la figure 8 est une vue analogue à la figure 7, les deux demi-boîtiers étant en position de fin d'accouplement;
- la figure 9 est une vue de dessus de deux demi-boîtiers en position intermédiaire d'accouplement; et
- la figure 10 est une vue en coupe, avec arrachement, du dispositif de la figure 2 par un plan médian longitudinal de la colonne.

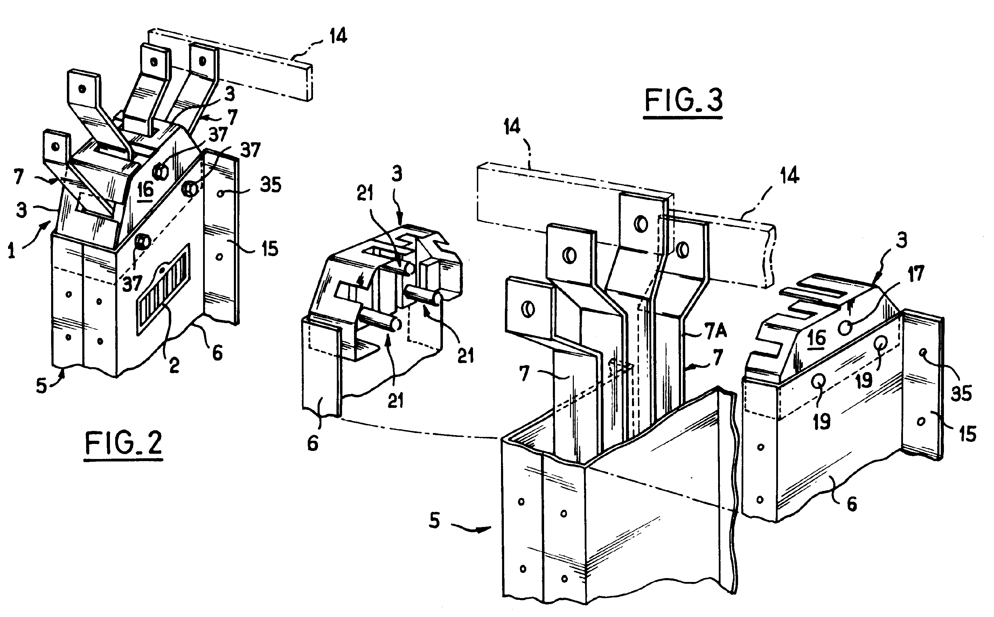

La présente invention est décrite dans le cadre d'une installation électrique composée d'une canalisation verticale - ou colonne - électrique 5 formée de deux demi-canalisations 6 entourant une nappe de barres verticales de distribution électrique 7. Les barres 7 sont alimentées à partir de barres principales horizontales 14 auxquelles elles sont reliées à leurs extrémités supérieures (voir figures 2 et 3). La colonne 5, par exemple en tôle, est elle-même fixée au moyen de rebords 15 et de vis 35, contre la face intérieure de la paroi arrière dune armoire électrique non représentée au dessin. La colonne 5 présente, le long de parois latérales opposées, des ouvertures munies d'obturateurs à glissières 2, connus en eux-mêmes, permettant de brancher de nombreux appareillages électriques sur les barres 7, dans les conditions de sécurité requises (les ouvertures 2 ne sont pas représentées à la figure 3). Les barres 7 ont une section rectangulaire dont la "largeur", supérieure à "l'épaisseur" et perpendiculaire au plan de la nappe, est choisie parmi plusieurs largeurs disponibles en fonction de la puissance maximale admissible voulue pour la colonne.

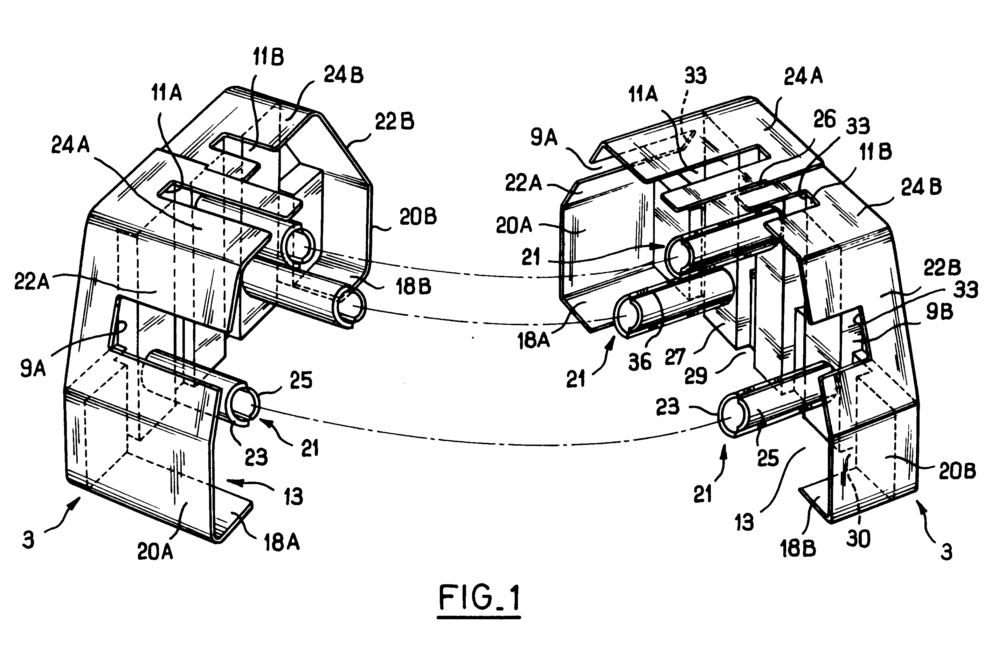

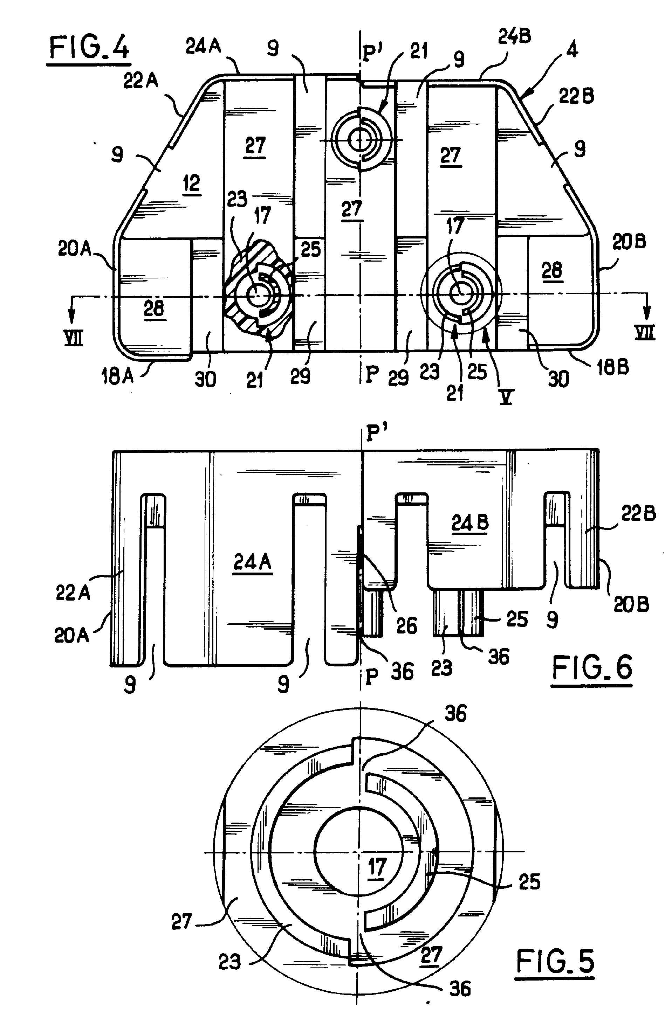

Pour éviter l'introduction accidentelle de pièces métalliques ou autres par le sommet de la colonne 5, on fixe à proximité de ce sommet un boîtier 1 formant capot (voir figure 1) réalisé en un matériau isolant telle qu'une matière plastique moulée. Ce boîtier 1 est constitué de deux demi-boîtiers identiques 3 comportant chacun, sur le pourtour d'une face ouverte, des échancrures 9A, 9B, 11A, 11B, 13 pour le passage de la nappe de barres verticales 7 à travers des parois latérales sensiblement planes 18A, 18B, 20A, 20B, 22A, 22B, 24A, 24B (figures 4 et 6) dudit demi-boîtier 5. Ces parois latérales forment une région d'emboîtement interne (18B, 20B, 22B, 24B). A leurs extrémités internes 33, les échancrures précitées atteignent une face interne d'un fond 12 du demi-boîtier ayant une face externe 16 qui définit une surface sensiblement plane de fixation contre une face intérieure correspondante de l'une respective des demi-canalisations 6 (voir figures 2 et 3).

Les parois supérieures 24A et 24B sont séparées par une fente 26 (voir figures 1, 6) partant du pourtour de la face ouverte et s'étendant vers le fond 12 sur une longueur supérieure à la moitié de la dimension correspondante de la paroi 24A.

La fente 26 s'étend dans un plan médian PP' du demi-boîtier, qui sépare les régions d'emboîtement interne et externe.

Du côté opposé à la fente 26, le demi-boîtier comporte également un évidement traversé par le plan médian PP'; cet évidement est constitué par l'échancrure 13 de passage de l'ensemble des barres 7 vers l'intérieur de la colonne.

La face extérieure de la région d'emboîtement interne est sensiblement symétrique par rapport au plan PP' de la face intérieure de la région d'emboîtement externe. Ainsi, lorsque les deux demi-boîtiers sont l'un en face de l'autre en position d'emboîtement, la région d'emboîtement interne de chacun d'eux s'emboîte de manière coulissante dans la région d'emboîtement externe de l'autre. Ces faces ont des génératrices parallèles entre elles et au plan PP ainsi qu'à la largeur des barres, et la direction de coulissement mutuel entre les deux demi-boîtiers, qui, on le comprendra, est parallèle à ces génératrices, et donc parallèle au plan PP' et à la largeur des barres.

Le fente 26 et l'échancrure 13 permettent la transition entre le demi-espace (d'un côté du plan PP') où l'un des demi-boîtiers entoure l'autre, et l'autre demi-espace, où l'autre demi-boîtier entoure le premier.

La face interne du fond 12 de chaque demi-boîtier porte des conformations de positionnement constituées par trois bossages centraux 27 et deux bossages latéraux 28 délimitant ensemble quatre logements parallèles ayant un écartement correspondant à celui des barres 7 et comprenant deux logements centraux 29 et deux logements latéraux 30. Ces logements peuvent recevoir des bords latéraux 7A des barres 7 situés d'un même côté de la nappe de barres, de façon à réaliser un positionnement mutuel du demi-boîtier et des barres 7. Les logements 29, 30 présentent à leur partie inférieure des avancées vers l'intérieur du demi-boîtier délimitées par des parois décalées 29A, 30A contre lesquelles les bords 7A des barres 7 viennent en butée.

Dans le fond 12 de chaque demi-boîtier sont ménagés trois orifices cylindriques de fixation 17, disposés symétriquement par rapport au plan médian PP'. L'orifice supérieur 17 est situé dans le plan médian et traverse l'un des bossages 27, placé entre les deux autres. Les deux orifices inférieurs 17 traversent les deux autres bossages centraux 27. Aux deux orifices inférieurs 17 correspondent deux orifices de fixation 19, de même diamètre et même écartement, pratiqués à l'extrémité supérieure de chaque demi-canalisation 6 de façon que l'on puisse réaliser l'assujettissement des deux demi-boîtiers 3 et des deux demi-canalisations 6 au moyen de deux boulons 37 traversant chacun un orifice 19 de chaque demi-canalisation et un orifice inférieur 17 de chaque demi-boîtier. Les deux orifices supérieurs 17 des deux demi-boîtiers permettent de compléter leur solidarisation mutuelle au moyen d'un troisième boulon 37.

Afin d'isoler électriquement les boulons ci-dessus à l'égard des barres 7 entre lesquelles ils s'étendent, les parois des orifices 17 sont prolongées à l'intérieur du demi-boîtier, au-delà des bossages de positionnement 27, par des canons élémentaires isolants 21. Chaque canon 21 est constitué par une languette extérieure 23 et une languette intérieure 25, ces deux languettes semi-cylindriques ayant pour axe l'axe de l'orifice 17 et étant décalées angulairement de 180° l'une par rapport à l'autre. Les deux languettes sont séparées l'une de l'autre par deux fentes axiales opposées 36 partant de l'extrémité libre du canon élémentaire et s'étendant dans un plan axial parallèle au plan médian PP' en ce qui concerne les orifices inférieurs et s'étendant dans le plan PP' lui-même en ce qui concerne l'orifice supérieur. Du point de vue géométrique, les canaux élémentaires de chaque demi-boîtier se déduisent l'un de l'autre par translation. La languette intérieure 25 a un rayon extérieur légèrement inférieur au rayon intérieur de la languette extérieure 23.

Les deux languettes 23, 25 sont réalisées d'une seule pièce avec le demi-boîtier 8 correspondant. La base de chaque canon isolant 21 est située dans un évidement de forme générale bi-hémicylindrique 31 ménagé dans le bossage central 27 correspondant, évidement qui est coaxial avec l'orifice 17. L'évidement 31 comprend une partie adjacente à la face extérieure de la base de la languette intérieure 25 pour recevoir l'extrémité libre de la languette extérieure 23 de l'un des canons 21 de l'autre demi-boîtier 8, et une partie adjacente à la face intérieure de la languette extérieure 23 pour recevoir l'extrémité libre de la languette intérieure 25 du canon en question. Les canons élémentaires 21 sont réalisés d'une seule pièce avec le demi-boîtier correspondant lors du moulage de ce dernier. Dans chaque demi-boîtier, chaque canon élémentaire 21 entoure et isole sensiblement complètement le boulon correspondant, à l'exception des fentes étroites 36, mais celles-ci sont situées, pour chaque canon, dans un plan axial perpendiculaire au plan de la nappe et parallèle à la largeur des barres 7. Autrement dit, les fentes sont aussi éloignées que possible des deux barres 7 voisines, ce qui allonge le chemin d'arc entre les boulons et les barres.

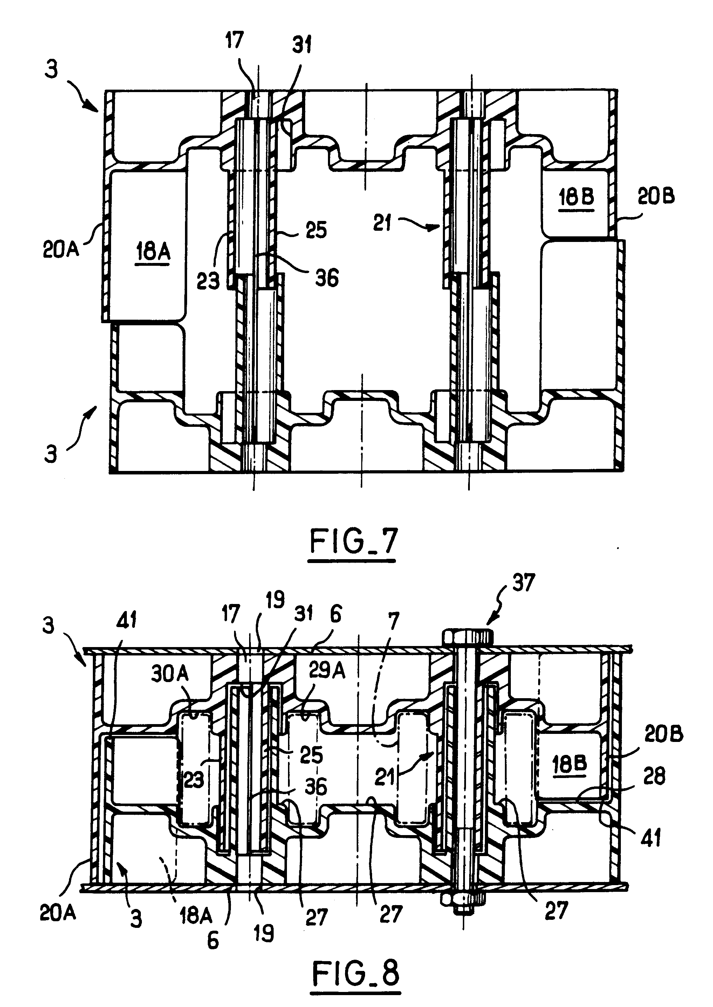

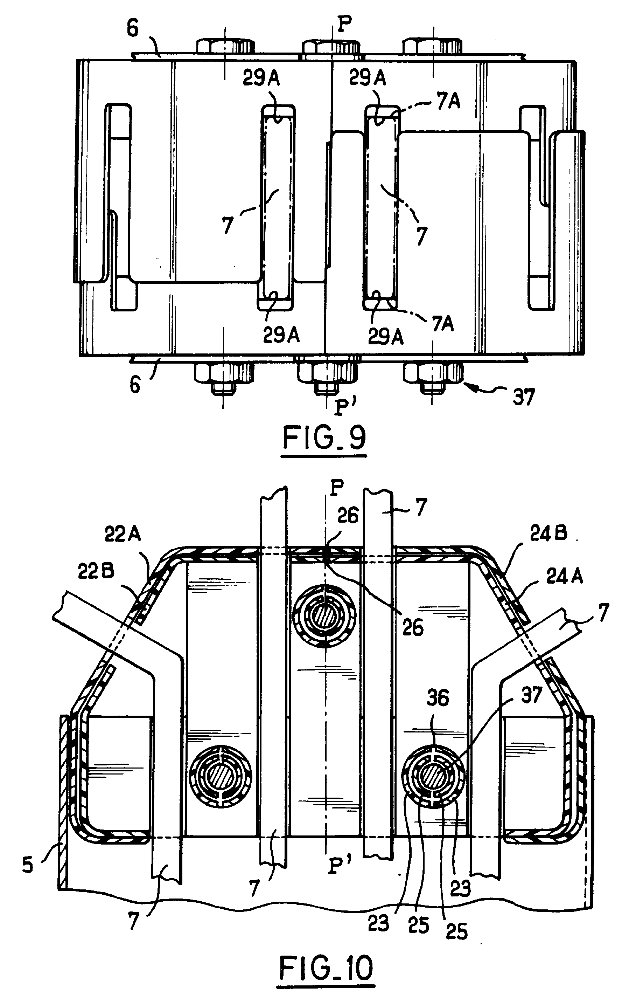

Les figures 7 à 9 représentent différents états d'accouplement de deux demi-boîtiers identiques 3, les barres 7 n'étant pas représentées à la figure 7. Il s'agit de la position de début d'accouplement (vue en coupe de la figure 7), de la position d'accouplement mutuel sur barres de relativement grande largeur (vue de dessus de la figure 9) et de la position de compacité maximale (vue en coupe de la figure 8). La région d'emboîtement externe 18A, 20A, 22A, 24A de chaque demi-boîtier est plus longue depuis le fond et parallèlement à la direction de coulissement, que la région d'emboîtement interne 18B, 20B, 22B, 24B. Ainsi, dans la position de compacité maximale, les extrémités libres 41 (figure 8) des parois latérales 18B, 20B, 22B, 24B, formant la région d'emboîtement interne, viennent en butée, contre les faces internes des bossages 27, 28 du demi-boîtier conjugué tandis que les extrémités libres de la région d'emboîtement externe de chaque demi-boîtier sont dans le plan de la face externe 16 du fond du demi-boîtier conjugué. En outre, pour chaque canon élémentaire isolant 21, les extrémités libres des languettes 23, 25, tout en pénétrant dans l'évidement conjugué 31, n'atteignent pas le fond de cet évidement, un intervalle étant ménagé afin d'éviter des contraintes sur les extrémités des languettes pouvant entraîner notamment des flexions indésirables de celles-ci.

La position de compacité maximale de la figure 8 constitue la configuration du boîtier correspondant à la dimension minimale des logements de barres, mesurée selon la direction de la largeur des barres (direction de coulissement). Une telle configuration est évidemment compatible avec des barres dont la largeur est inférieure à la valeur minimale ci-dessus, avec le seul inconvénient que la fermeture du sommet de la colonne serait moins hermétique.

Grâce à la pénétration des canons élémentaires 21 dans les évidements 31, la relativement grande longueur des canons élémentaires 21 n'est pas incompatible avec la relativement faible dimension des logements des barres dans la position de compacité maximale. De plus, la paroi périphérique de chaque évidement 31 sert de guide et de maintien pour l'extrémité de la languette extérieure 23 qui y pénètre.

Les différentes positions d'accouplement intermédiaire (dont un exemple est représenté à la figure 9) forment autant de configurations du boîtier adaptées à différentes barres 7 de différentes largeurs supérieures à celle des barres de la figure 8. Les différentes positions d'accouplement se distinguent les unes des autres par un recouvrement mutuel plus ou moins grand des régions d'emboîtement et des canons élémentaires isolants conjugués 21. Il existe pour la largeur des barres une valeur maximale correspondant à l'interengagement minimal des régions d'emboîtement interne et externe des demi-boîtiers qui est nécessaire pour assurer un positionnement mutuel suffisant de ces demi-boîtiers. Grâce à la longueur optimisée et différenciée des régions d'emboîtement externe 18A, 20A, 22A, 24A et interne 18B, 20B, 22B, 24B, et à la grande longueur des canons individuels 21, rendue possible par les évidements 31, cette valeur maximale de la largeur des barres est rendue aussi grande que possible par rapport à la dimension minimale prise par les logements des barres lorsque le boîtier est en position de compacité maximale.

Il est cependant avantageux d'avoir une configuration dans laquelle les extrémités libres des languettes 23, 25 de chaque canon 21 s'étendent au moins jusqu'à l'évidement cylindrique conjugué 31 ou pénètrent dans celui-ci. Dans ce cas, les boulons de fixation des demi-boîtiers passant entre les barres 7 sont entourés chacun et partout par deux rangs de languettes, ce qui améliore leur isolation et constitue une garantie contre la rupture accidentelle d'une des quatre languettes correspondantes.

Pour monter un boîtier isolant conforme à l'invention sur une installation électrique telle que décrite comprenant de barres de dérivation 7 reliées à des barres principales 14, on peut se contenter de dévisser les vis 35 fixant la partie supérieure de la canalisastion 5, de façon à pouvoir écarter les extrémités des demi-canalisations 6 et insérer chacun des demi-boîtiers 3 entre la nappe de barres 7 et chaque demi-canalisation 6, en faisant coïncider les orifices 17 et 19. On positionne ensuite les échancrures 9 par rapport aux barres 7 et on emboîte à coulisse les deux demi-boîtiers l'un avec l'autre jusqu'à ce qu'ils viennent en butée contre les barres de part et d'autre de celles-ci. Puis on serre les boulons 37, pour solidariser les deux demi-boîtiers avec la colonne 5 dont il suffit de visser les rebords 15 sur la paroi de l'armoire électrique pour terminer le montage. L'appui des demi-boîtiers sur les barres limite la course de coulissement mutuel des deux demi-boîtiers l'un vers l'autre, et définit ainsi pour le boîtier, parmi les différentes positions possibles, une position d'accouplement qui est optimale compte tenu de la largeur des barres. Comme les canons 21 font partie intégrante des demi-boîtiers, on est certain de leur mise en place, et on n'a plus besoin d'effectuer un contrôle à ce sujet. Le boîtier 1 occupe sensiblement complètement la section transversale intérieure de la colonne 5. Ceci implique une adaptation mutuelle des caractéristiques dimensionnelles du boîtier et de la colonne, laquelle peut avoir différentes largeurs en fonction de la largeur des barres.

Grâce à l'invention, un seul moule pour les demi-boîtiers tous identiques permet de réaliser des boîtiers pouvant accueillir des barres de différentes largeurs sans risque que l'on oublie de mettre en place les canons d'isolation des boulons lors du montage.

Bien entendu, l'invention n'est pas limitée à l'exemple que l'on vient de décrire, auquel on peut apporter de nombreuses modifications sans sortir du cadre de celle-ci.

Sur chaque demi-boîtier les canons élémentaires situés de part et d'autre du plan médian pourraient être deux tubes de diamètres différents, de façon que le tube de petit diamètre de chaque demi-boîtier coulisse dans le tube de grand diamètre de l'autre demi-boîtier lors de l'interengagement.

## Revendications

1. Boîtier de protection (1) pour barres de distribution électrique (7), en matériau isolant, destiné à entourer une région d'une nappe de barres de distribution électrique, ce boîtier comprenant deux demi-boîtiers (3) comportant, sur le pourtour d'une face ouverte, des échancrures (9A, 9B, 11A, 11B, 13) formant, après accouplement des demi-boîtiers (3), des passages d'entrée et de sortie pour les barres (7), caractérisé en ce que les deux demi-boîtiers s'accouplent par coulissement mutuel selon une direction d'accouplement sensiblement perpendiculaire à ladite nappe jusqu'à une position d'accouplement mutuel qui est variable en fonction de la dimension des barres parallèlement à la direction de coulissement.

2. Boîtier de protection conforme à la revendication 1, caractérisé en ce que la position d'accouplement mutuel est définie par butée des barres contre une partie au moins (29A, 30A) du fond de chaque demi-boîtier (3).

3. Boîtier de protection conforme à l'une des revendications 1 ou 2, caractérisé en ce que les deux demi-boîtiers (3) sont identiques, une région d'accouplement de chaque demi-boîtier comprenant d'un côté d'un plan médian (PP') une région d'emboîtement externe (18A, 20A, 22A, 24A) et de l'autre côté du plan médian une région d'emboîtement interne (18B, 20B, 22B, 24B), les deux régions d'emboîtement étant séparées par des régions évidées (26, 13) traversées par le plan médian (PP').

4. Boîtier de protection conforme à la revendication 3, caractérisé en ce que la région d'emboîtement externe (18A, 20A, 22A, 24A) de chaque demi-boîtier est plus longue, parallèlement à la direction d'accouplement, que la région d'emboîtement interne (18B, 20B, 22B, 24B).

5. Boîtier de protection conforme à l'une des revendications 3 ou 4, caractérisé en ce que la course de coulissement des demi-boîtiers l'un par rapport à l'autre dans le sens de l'accouplement est limitée par butée de la région d'emboîtement interne (18B) de chaque demi-boîtier contre une face intérieure (29A, 30B) de l'autre demi-boîtier.

6. Boîtier de protection conforme à l'une des revendications 3 ou 4, caractérisé en ce qu'il comprend des moyens de butée limitant la course de coulissement des demi-boîtiers l'un par rapport à l'autre dans le sens de l'accouplement en une position de compacité maximale dans laquelle une extrémité libre de la région d'emboîtement externe de chaque demi-boîtier (3) est sensiblement située le long du pourtour d'une face frontale extérieure (16) de l'autre demi-boîtier (3).

7. Boîtier de protection conforme à l'une des revendications 1 ou 2, dans lequel les demi-boîtiers sont reliés par des moyens de fixation à vis (37) s'étendant dans au moins un canon isolant (21) entre des barres conductrices voisines (7), caractérisé en ce que le canon isolant (21) est réalisé sous forme de partie intégrante de l'un au moins des demi-boîtiers (3).

8. Boîtier de protection conforme à la revendication 7, caractérisé en ce que le canon comprend deux parties (21) appartenant chacune à l'un des demi-boîtiers (3) et coulissant l'un par rapport à l'autre lors du mouvement d'accouplement de demi-boîtiers.

9. Boîtier de protection conforme à l'une des revendications 3 à 6, dans lequel les demi-boîtiers (3) sont reliés par des moyens de fixation à vis (37) s'étendant dans au moins un canon isolant entre des barres conductrices voisines (7), caractérisé en ce que le canon isolant comprend deux canons élémentaires identiques (21) appartenant chacun à l'un des demi-boîtiers (3), chaque canon élémentaire comprenant au moins une languette extérieure (23) et une languette intérieure (25) décalée angulairement par rapport à la languette extérieure et adaptée à coulisser dans la languette extérieure du canon élémentaire de l'autre demi-boîtier.

10. Boîtier de protection conforme à la revendication 9, caractérisé en ce que les languettes (23, 25) de chaque canon élémentaire sont semi-cylindriques et angulairement opposées et séparées par deux fentes axiales opposées (36) partant de l'extrémité libre du canon.

11. Boîtier de protection conforme à la revendication 10, caractérisé en ce que les deux fentes (36) sont dans un même plan perpendiculaire au plan de la nappe.

12. Boîtier de protection conforme à l'une des revendications 9 à 11, caractérisé en ce que les moyens de fixation à vis (37) comprennent deux moyens élémentaires disposés symétriquement de part et d'autre du plan médian (PP'), et deux canons constitués de canons élémentaires (21) avec, pour chaque demi-boîtier (3), deux canons élémentaires de chaque demi-boîtier se déduisant l'un de l'autre par translation.

13. Boîtier de protection conforme à l'une des revendications 9 à 12, caractérisé par un évidement (31) adjacent à la face extérieure de la base des languettes intérieures (25) et un évidement (31) adjacent à la face intérieure de la base des languettes extérieures (23), pour recevoir les extrémités libres des languettes du canon de l'autre demi-boîtier (3) en fin de course de coullissement jusqu'à la position de compacité maximale.

## Patentansprüche

1. Schutzgehäuse (1) aus isolierendem Werkstoff für elektrische Verteilungsschienen (7), das dazu bestimmt ist, einen Bereich einer elektrischen Verteilungsschienenbahn zu umgeben, wobei dieses Gehäuse zwei Gehäusehälften (3) umfaßt, die auf dem Umfang einer offenen Seite Ausschnitte (9A, 9B, 11A, 11B, 13) umfassen, die nach Kupplung der Gehäusehälften (3) Eingangs- und Ausgangsdurchgänge für die Schienen (7) bilden, dadurch gekennzeichnet, daß die beiden Gehäusehälften durch gegenseitiges Verschieben in einer im wesentlichen zur Bahn senkrechten Kupplungsrichtung bis in eine Stellung der gegenseitigen Kupplung gekuppelt werden, die in Abhängigkeit von der Abmessung der Schienen parallel zur Verschiebungsrichtung veränderlich ist.

2. Schutzgehäuse nach Anspruch 1, dadurch gekennzeichnet, daß die Stellung der gegenseitigen Kupplung durch Anschlagen der Schienen an wenigstens einem Teil (29A, 30A) des Bodens jeder Gehäusehälfte (3) definiert ist.

3. Schutzgehäuse nach einem der Ansprüche 1 oder 2, dadurch gekennzeichnet, daß die beiden Gehäusehälften (3) identisch sind, wobei ein Kupplungsbereich jeder Gehäusehälfte auf einer Seite einer Mittelebene (PP') einen äußeren Einsteckbereich (18A, 20A, 22A, 24A) und auf der anderen Seite der Mittelebene einen inneren Einsteckbereich (18B, 20B, 22B, 24B) umfaßt und die beiden Einsteckbereiche durch ausgesparte Bereiche (26, 13) getrennt sind, die von der Mittelebene (PP') durchquert werden.

4. Schutzgehäuse nach Anspruch 3, dadurch gekennzeichnet, daß der äußere Einsteckbereich 818A, 20A, 22A, 24A) jeder Gehäusehälfte parallel zur Kupplungsrichtung länger als der innere Einsteckbereich (18B, 20B, 22B, 24B) ist.

5. Schutzgehäuse nach einem der Ansprüche 3 oder 4, dadurch gekennzeichnet, daß die Verschiebungsbewegung der beiden Gehäusehälften zueinander in der Richtung der Kupplung durch Anschlagen des inneren Einsteckbereichs (18B) jeder Gehäusehälfte an einer Innenfläche (29A, 30B) der anderen Gehäusehälfte begrenzt ist.

6. Schutzgehäuse nach einem der Ansprüche 3 oder 4, dadurch gekennzeichnet, daß es Anschlagsmittel umfaßt, die die Verschiebungsbewegung der Gehäusehälften zueinander in der Richtung der Kupplung in einer Stellung maximaler Kompaktheit begrenzen, in der ein freies Ende des äußeren Einsteckbereichs jeder Gehäusehälfte (3) im wesentlichen längs des Umfangs einer äußeren Stirnfläche (16) der anderen Gehäusehälfte (3) gelegen ist.

7. Schutzgehäuse nach einem der Ansprüche 1 oder 2, in dem die beiden Gehäusehälften durch Schrauben-Befestigungsmittel (37) verbunden sind, die sich in wenigstens einem isolierenden Rohr (21) zwischen benachbarten leitenden Schienen (7) erstrecken, dadurch gekennzeichnet, daß das isolierende Rohr (21) in Form eines integrierenden Teils wenigstens einer der Gehäusehälften (3) ausgebildet ist.

8. Schutzgehäuse nach Anspruch 7, dadurch gekennzeichnet, daß das Rohr zwei Teile (21) umfaßt, die jeweils zu einer der Gehäusehälften (3) gehören und bei der Kupplungsbewegung der Gehäusehälften gegeneinander verschoben werden.

9. Schutzgehause nach einem der Ansprüche 3 bis 6, in dem die Gehäusehälften (3) durch Schrauben-Befestigungsmittel (37) verbunden sind, die sich in wenigstens einem isolierenden Rohr zwischen benachbarten leitenden Schienen (7) erstrecken, dadurch gekennzeichnet, daß das isolierende Rohr zwei identische Einzelrohre (21) umfaßt, die jeweils zu einer der Gehäusehalften (3) gehören und deren jedes wenigstens eine außere Zunge (23) und eine innere Zunge (25) umfaßt, die winkelmaßig gegen die äußere Zunge versetzt ist und in der außeren Zunge des Einzelrohrs der anderen Gehäusehälfte verschoben werden kann.

10. Schutzgehäuse nach Anspruch 9, dadurch gekennzeichnet, daß die Zungen (23, 25) jedes Einzelrohrs halbzylindrisch und winkelmäßig einander entgegengesetzt sind und durch zwei einander entgegengesetzte axiale Schlitze (36) getrennt sind, die vom freien Ende des Rohrs ausgehen.

11. Schutzgehäuse nach Anspruch 10, dadurch gekennzeichnet, daß die beiden Schlitze (36) in einer gemeinsamen zur Ebene der Bahn senkrechten Ebene liegen.

12. Schutzgehäuse nach einem der Anspruche 9 bis 11, dadurch gekennzeichnet, daß die Schrauben-Befestigungsmittel (37) zwei Einzelmittel, die symmetrisch zu beiden Seiten der Mittelebene (PP') angeordnet sind, und zwei Rohre umfassen, die aus Einzelrohren (21) bestehen, mit, bei jeder Gehäusehälfte (3), zwei Einzelrohren jeder Gehäusehälfte, die sich durch Translation voneinander ableiten.

13. Schutzgehäuse nach einem der Ansprüche 9 bis 12, gekennzeichnet durch eine an die Außenseite der Basis der inneren Zungen (25) angrenzende Aussparung (31) und eine an die Innenseite der Basis der äußeren Zungen (23) angrenzende Aussparung (31) zur Aufnahme der freien Enden der Zungen des Rohrs der anderen Gehäusehälfte (3) am Ende der Verschiebungsbewegung in die Stellung maximaler Kompaktheit.

## Claims

1. Insulative material protective housing (1) for electrical distribution busbars (7) adapted to surround a region of a flat bundle of electrical distribution busbars, said housing comprising two half-housings (3) comprising around an open side openings (9A, 9B, 11A, 11B, 13) which after the two half-housings (3) are coupled together form entry and exit passages for the busbars (7), characterised in that the two half-housings are coupled together by mutual sliding in a coupling direction substantially perpendicular to said bundle as far as a mutual coupling position which varies according to the dimension of the busbars parallel to the sliding direction.

2. Protective housing according to claim 1 characterised in that the mutual coupling position is defined by abutment of the busbars against at least one part (29A, 30A) of the back of each half-housing (3).

3. Protective housing according to claim 1 or claim 2 characterised in that the two half-housings (3) are identical, a coupling region of each half-housing having on one side of a median plane (PP') an exterior nesting region (18A, 20A, 22A, 24A) and on the other side of the median plane an interior nesting region (18B, 20B, 22B, 24B), and the two nesting regions are separated by open regions (26, 13) through which the median plane (PP') passes.

4. Protective housing according to claim 3 characterised in that the exterior nesting region (18A, 20A, 22A, 24A) of each half-housing is longer parallel to the coupling direction than the interior nesting region (18B, 20B, 22B, 24B).

5. Protective housing according to claim 3 or claim 4 characterised in that the sliding travel of the half-housings relative to each other in the coupling direction is limited by abutment of the interior nesting region (18B) of each half-housing against an inside surface (29A, 30B) of the other half-housing.

6. Protective housing according to claim 3 or claim 4 characterised in that it comprises abutment means limiting the sliding travel of the half-housings relative to each other in the coupling direction in a maximally closed position in which a free end of the exterior nesting region of each half-housing (3) is substantially aligned with the edge of an outside front surface (16) of the other half-housing (3).

7. Protective housing according to claim 1 or claim 2 wherein the half-housings are connected by screw fastener means (37) extending inside at least one insulative bush (21) between adjacent conductive busbars (7) characterised in that the insulative bush (21) is an integral part of at least one of the half-housings (3).

8. Protective housing according to claim 7 characterised in that the bush has two parts (21) each of which is part of one of the two half-housings (3) and which slide relative to each other during coupling movement of the half-housings.

9. Protective housing according to any one of claims 3 to 6 wherein the half-housings (3) are connected by screw fastener means (37) extending in at least one insulative bush between adjacent conductive busbars (7) characterised in that the insulative bush comprises two identical bush elements (21) each of which is part of one of the two half-housings (3) and each bush element comprises at least one outer tongue (23) and one inner tongue (25) offset angularly relative to the outer tongue and adapted to slide in the outer tongue of the bush element of the other half-housing.

10. Protective housing according to claim 9 characterised in that the tongues (23, 25) of each bush element are semi-cylindrical, angularly opposed and separated by two opposed axial slots (36) extending from the free end of the bush.

11. Protective housing according to claim 10 characterised in that the two slots (36) are in a common plane perpendicular to the plane of the bundle of busbars.

12. Protective housing according to any one of claims 9 through 11 characterised in that the screw fastener means (37) comprise two fastener elements disposed symmetrically on respective opposite sides of the median plane (PP') and two bushes made up of bush elements (21) and on each half-housing (3) two bush elements of each half-housing are each deduced from the other by translatory movement.

13. Protective housing according to any one of claims 9 to 12 characterised by a recess (31) adjacent the outside surface of the base of the inner tongues (25) and a recess (31) adjacent the inside surface of the base of the outer tongues (23) to receive the free ends of the tongues of the bush of the other half-housing (3) at the end of sliding travel as far as the maximally closed position.
